(19) Europäisches Patentamt
European Patent Office
Office européen des brevets

(11) **EP 3 578 680 A1**

(12) **EUROPEAN PATENT APPLICATION**
published in accordance with Art. 153(4) EPC

(43) Date of publication:
**11.12.2019 Bulletin 2019/50**

(51) Int Cl.:
*C23C 2/12* (2006.01)  *B21D 22/20* (2006.01)
*C21D 1/18* (2006.01)  *C21D 9/00* (2006.01)
*C22C 21/00* (2006.01)  *C22C 38/00* (2006.01)
*C22C 38/38* (2006.01)  *C23C 2/28* (2006.01)
*C21D 9/46* (2006.01)

(21) Application number: 17895149.7

(22) Date of filing: **02.02.2017**

(86) International application number:
**PCT/JP2017/003763**

(87) International publication number:
**WO 2018/142534 (09.08.2018 Gazette 2018/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nippon Steel Corporation**
**Tokyo 1008071 (JP)**

(72) Inventors:
• **FUDA Masahiro**
**Tokyo 100-8071 (JP)**

• **MAKI Jun**
**Tokyo 100-8071 (JP)**
• **FUJITA Soshi**
**Tokyo 100-8071 (JP)**
• **KUSUMI Kazuhisa**
**Tokyo 100-8071 (JP)**
• **TABATA Shinichiro**
**Tokyo 100-8071 (JP)**

(74) Representative: **Vossius & Partner**
**Patentanwälte Rechtsanwälte mbB**
**Siebertstrasse 3**
**81675 München (DE)**

(54) **ALLOYED-Al-PLATED STEEL SHEET FOR HOT STAMPING, AND HOT-STAMPED MEMBER**

(57)    The present invention provides an alloyed Al plated steel sheet for hot stamping, which is a steel sheet having, on the surface, an Al-Fe alloyed layer that includes an A phase (Fe-Al-based alloy phase including 45% to 85% of Fe and 4% to 13% of Si) and has a thickness of 15 $\mu$m or more, in which a proportion of a length occupied by the A phase in an uppermost surface of a cross section perpendicular to the surface of the steel sheet is 10% or more and 50% or less.

FIG. 1

MEASUREMENT LENGTH

L1  L2  Ln

STRAIGHT LINE PARALLEL TO MIDDLE OF THICKNESS

ALLOYED LAYER

STEEL SHEET (BASE METAL)

A PHASE
(Fe-Al-BASED ALLOY PHASE INCLUDING 4% TO 13% OF Si)

**Description**

[Technical Field of the Invention]

The present invention relates to an alloyed Al plated steel sheet for hot stamping suitable for a hot stamping method, which is one of forming methods for obtaining a high strength member, and a hot stamped steel member.

[Related Art]

In the field of transportation machines such as vehicles, efforts are being made to reduce the mass of a vehicle body by using high strength materials. That is, in recent years, there is a trend toward an increase in the mass of a vehicle body as collision safety is secured and new functions are installed. In order to offset the increased mass of the vehicle body, it has been advocated to reduce the carbon dioxide emissions even with a little improvement in fuel economy. For these reasons, in the field of transportation machines such as vehicles, the use of high strength steel sheets has been steadily increased.

A major obstacle in the expansion of use of such high strength steel sheets is the emergence of a phenomenon called "deterioration of shape fixability", which is unavoidable in a case where the strength of the steel sheet is increased. This phenomenon is a general term for cases where the amount of springback is increased in a product after deformation processing due to high-strengthening of a steel sheet and thus a desired shape cannot be easily obtained. In order to solve this phenomenon, machining (for example, restrike) which is unnecessary is added to low strength materials (materials having excellent shape fixability or no problem therewith), modification of a product shape is performed. However, in these solutions, there is a problem that an increase in the cost due to an increase in the number of processes and modification from a desired design shape cannot be avoided.

As one of methods to solve this problem, a hot forming method called a hot stamping method has attracted attention. The hot stamping method is a method of heating a steel sheet (workpiece or blank) to a predetermined temperature (generally a temperature at which an austenite phase is formed) to reduce strength (that is, to facilitate forming) and forming the steel sheet with dies at a lower temperature (that is, room temperature) than that of the workpiece. By adopting the hot stamping method, the product is easily shaped, and at the same time, a rapid cooling heat treatment (hardening) using the temperature difference between the steel sheet and the dies is performed, whereby the strength of the product after the forming can be secured. In recent years, the utility of the hot stamping method has been widely recognized, and the number of application examples has also increased steadily.

On the other hand, with the expansion of the use of the hot stamping method, low productivity, which is a weak point of the hot stamping method that has not been considered a problem, has come to be recognized as a problem to be solved by all means. For example, in a case where a single component is to be manufactured from a single blank in a single press step (1 stroke), it is quite easy to press one component by a cold pressing method, which is a method in the related art. The productivity in the case of this example is expressed as 60 strokes per minute, and is often abbreviated to 60 spm.

On the other hand, in the hot stamping method, there is a problem that the productivity in a case of being expressed by the same notation is not more than 2 or 3 spm at most, primarily due to the following two factors. One factor is that it takes time to heat the blank to a predetermined temperature. Another factor is that in order to reliably cool the workpiece after being formed (pressed) with dies, the workpiece is held for a certain period of time at the bottom dead point in many cases.

As one of means for improving the low productivity of such a hot stamping method, there is a method of rapidly heating a blank. This method is intended to remedy the former factor of the causes of the low productivity of the hot stamping method. There are various methods as the method of rapidly heating the blank. However, among the methods, an energization heating method starts to be used by some producers because facilities are not so large.

For example, Patent Document 1 discloses a hot press forming method in which one or more electrodes are attached to each of both end portions of a metal sheet in a die, an electric current is applied between the electrodes to heat the metal sheet to a predetermined working temperature by Joule heat, and thereafter the metal sheet is press formed.

However, in a case where corrosion resistance is required for a component after forming, it is an option to use an Al plated steel sheet as a blank. When the Al plated steel sheet is heated according to an energization heating method, it is necessary to bring an electrode for energization into contact with the steel sheet. The electrode is generally made of copper or a copper alloy, and is water-cooled during energization. Therefore, even though energization heating is performed, in a part of the Al plated steel sheet that is brought into contact with the electrode is not heated to such a temperature that an Al plating layer becomes an Al-Fe alloy. Therefore, in the hot stamping method, press-formed article (hot stamped article) in which the part remains unalloyed is produced.

The unalloyed part of the Al plating has a problem of poor spot weldability. That is, when spot welding is continuously performed on the unalloyed part of the Al plating, Al is deposited on the electrode for welding, and there is a problem that removal thereof has to be performed frequently. That is, the presence of the unalloyed part of Al plating in the hot stamped article has a problem that selection of nonuse of the part is (leading to a reduction in yield), design of a component to be finished without welding of the part (the degree of freedom of design is limited), or acceptance of an inefficient welding process (productivity decreases) is urged.

Regarding these problems, Patent Document 2 discloses a method in which an Al plated steel sheet is heat-treated using a box annealing furnace to be formed into a steel sheet in which an Al plating layer is alloyed (hereinafter, referred to as an alloyed Al plated steel sheet) and is provided for hot stamping. With this method, the problem of spot weldability of the unalloyed Al plating layer is also solved. However, since annealing over a long period of time is necessary, there is concern about compatibility between fatigue properties and corrosion resistance, and improvement in productivity cannot be expected.

[Prior Art Document]

[Patent Document]

[Patent Document 1] Japanese Unexamined Patent Application, First Publication No. 2002-18531

[Patent Document 2] Japanese Unexamined Patent Application, First Publication No. 2011-137210

[Disclosure of the Invention]

[Problems to be Solved by the Invention]

An alloyed Al plated steel sheet in which an Al plating layer is alloyed in advance can cope with rapid heating in the hot stamping method and is thus a steel sheet effective for improving the productivity of the hot stamping method. Furthermore, in the field of transportation machines and transportation vehicles such as vehicles, where the application of alloyed Al plated steel sheets tends to increase, steel sheets having not only the corrosion resistance but also fatigue properties are desired. That is, the applicable range of alloyed Al plated steel sheets for hot stamping is widened when the sheets are excellent in fatigue properties and corrosion resistance.

However, in the alloyed Al plated steel sheets for hot stamping hitherto developed, the relation between an alloyed coated layer, corrosion resistance, and fatigue properties has not been examined. Therefore, the development of a steel sheet for hot stamping capable of achieving both corrosion resistance and fatigue properties has been desired.

The present invention has been devised in view of such circumstances, and an object thereof is to provide an alloyed Al plated steel sheet for hot stamping suitable for manufacturing a hot stamped steel member excellent in corrosion resistance and fatigue properties using a hot stamping method.

Another object of the present invention is to provide a hot stamped steel member excellent in corrosion resistance and fatigue properties.

[Means for Solving the Problem]

The present inventors focused on the utility of an alloyed Al plated steel sheet for hot stamping, and conducted examinations to provide an alloyed Al plated steel sheet excellent in fatigue properties and corrosion resistance even after hot stamping.

First, the present inventors made prototypes of alloyed Al plated steel sheets under various alloying heat treatment conditions and conducted hot stamping experiments. The properties of the obtained hot stamped steel member after hot stamping were examined in association with the phase configuration of an Al-Fe alloyed layer.

As a result, it was found that the strength and ductility of the hot stamped steel member are not affected by alloying conditions of an Al plating layer, that is, the strength and ductility of the hot stamped steel member do not depend on the phase configuration and morphology of the alloyed Al plating layer. On the other hand, it was found that the fatigue properties and corrosion resistance of the hot stamped steel member depend on the phase configuration and morphology of the alloyed Al plating layer of the alloyed Al plated steel sheet before hot stamping.

As a result of more intensive studies, the phase configuration and morphology of an alloyed Al plating layer with which excellent fatigue properties and corrosion resistance are obtained was clarified. In addition, alloying conditions for obtaining such a steel sheet were newly found.

The present invention has been completed on the basis of the new findings, and the gist thereof is as follows.
(1) An alloyed Al plated steel sheet for hot stamping includes:

a steel sheet including, as a chemical composition, by mass%,

C: 0.18% to 0.36%,
Si: 0.02% to 0.5%,
Mn: 1.2% to 2.2%,
P: 0.001% to 0.03%,
S: 0.0001% to 0.02%,
Cr: 1.1% to 2.1%,
N: 0.001% to 0.01%,
Ti: 0.01% to 0.5%,
Al: 0.01% to 0.1%,
B: 0.0001% to 0.01%, and
a remainder including Fe and impurities; and

an Al-Fe alloyed layer which is formed on a surface of the steel sheet and has a thickness of 15 $\mu$m or more, in which the Al-Fe alloyed layer includes an Fe-Al-based alloy phase including 45% to 85% of Fe and 4% to 13% of Si, and a proportion of a length occupied by the Fe-Al-based alloy phase in an uppermost surface of a cross section perpendicular to the surface of the steel sheet is 10% or more and 50% or less.

(2) The alloyed Al plated steel sheet for hot stamping according to (1) may further include, as the chemical composition, by mass%:

Nb: 0.01% to 1.0%.

(3) A hot stamped steel member obtained by performing forming and hardening in a same process through forming using dies after heating the alloyed Al plated steel sheet for hot stamping according to (1) or (2) to a temperature at which at least a portion of the alloyed Al plated steel sheet for hot stamping becomes an austenite phase.

(4) A hot stamped steel member includes:

a steel including, as a chemical composition, by mass%,

C: 0.18% to 0.36%,
Si: 0.02% to 0.5%,
Mn: 1.2% to 2.2%,
P: 0.001% to 0.03%,
S: 0.0001% to 0.02%,
Cr: 1.1% to 2.1%,
N: 0.001% to 0.01%,
Ti: 0.01% to 0.5%,
Al: 0.01% to 0.1%,
B: 0.0001% to 0.01%, and
a remainder including Fe and impurities; and

an Al-Fe alloyed layer which is formed on a surface of the steel and has a thickness of 15 $\mu$m or more, in which the Al-Fe alloyed layer includes an Fe-Al-based alloy phase including 45% to 85% of Fe and 4% to 13% of Si, and a proportion of a length occupied by the Fe-Al-based alloy phase in an uppermost surface of a cross section perpendicular to the surface of the steel sheet is 10% or more and 50% or less.

(5) The hot stamped steel member according to (4) may further include, as the chemical composition, by mass%:
Nb: 0.01% to 1.0%.

[Effects of the Invention]

According to the present invention, it is possible to provide an alloyed Al plated steel sheet for hot stamping suitable for manufacturing a hot stamped steel member excellent in corrosion resistance and fatigue properties using a hot stamping method.

Furthermore, according to the present invention, it is possible to provide a hot stamped steel member excellent in corrosion resistance and fatigue properties.

In particular, according to the alloyed Al plated steel sheet for hot stamping of the present invention, even in a case where a rapid heating method such as energization heating method is adopted for heating for hot stamping, a stamped article (hot stamped steel member) excellent in fatigue properties and corrosion resistance can be produced. In addition, since a component manufacturer (a person who performs hot stamping) can use rapid heating means such as energization heating instead of heating means using an annealing furnace in the related art, the productivity of the stamped article can be increased.

[Brief Description of the Drawings]

FIG. 1 is a schematic view showing, in a cross section perpendicular to a surface of a steel sheet for hot stamping (alloyed Al plated steel sheet) after an alloying heat treatment, lengths of an A phase (Fe-Al-based alloy phase including 45% to 85% of Fe and 4% to 13% of Si) in an uppermost surface of an Al-Fe alloyed layer, and a proportion of the lengths of the A phase in the uppermost surface of the Al-Fe alloyed layer.
FIG. 2 is a schematic view of a temperature history of the alloying heat treatment.
FIG. 3 is a view showing a fatigue test piece, where the unit of the numerical values in the figure is mm.
FIG. 4 is a graph showing the relationship between the concentration of Cr in steel and the value of the middle side of Formula (1) when the proportion of the A phase becomes 50% in Example 1.
FIG. 5 is a schematic perspective view of a hat-shaped hot stamped steel member, where the unit of the numerical values in the figure is mm.

[Embodiments of the Invention]

An alloyed Al plated steel sheet for hot stamping according to the present invention includes: a steel sheet; and an Al-Fe alloyed layer formed on the surface of the steel sheet into a thickness of 15 $\mu$m or more. The steel sheet includes, as a chemical composition, by mass%, C: 0.18% to 0.36%, Si: 0.02% to 0.5%, Mn: 1.2% to 2.2%, P: 0.001% to 0.03%, S: 0.0001% to 0.02%, Cr: 1.1% to 2.1%, N: 0.001% to 0.01%, Ti: 0.01% to 0.5%, Al: 0.01% to 0.1%, B: 0.0001% to 0.01%, and a remainder including Fe and impurities. Hereinafter, there are cases where the steel sheet is referred to as a base metal. In addition, the Al-Fe alloyed layer includes an Fe-Al-based alloy phase including 45% to 85% of Fe and 4% to 13% of Si. In the following description, there are cases where the "Fe-Al-based alloy phase including 45% to 85% of Fe and 4% to 13% of Si" is referred to as an A phase. There are cases where, among alloy phases and metal phases included in the Al-Fe alloyed layer, phases other than the A phase are referred to as a B phase. In the A phase in the Al-Fe alloyed layer, when the Al-Fe alloyed layer is viewed in a cross section perpendicular to the surface of the steel sheet, the proportion of the lengths occupied by the A phase in the uppermost surface of pf the Al-Fe alloyed layer is 10% or more and 50% or less.

Hereinafter, the alloyed Al plated steel sheet for hot stamping of the present invention will be described in detail. In the following description, there are cases where the alloyed Al plated steel sheet for hot stamping is referred to as a steel sheet for hot stamping.

First, the chemical composition of the steel sheet which is the base metal of the steel sheet for hot stamping will be described. In addition, % mentioned means mass% unless otherwise specified.

<C: 0.18% to 0.36%>

C is the most important element for high-strengthening of a hot stamped steel member by a hot stamping method. In order to obtain a strength of at least about 1500 MPa in the hot stamped steel member, 0.18% or more of C needs to be included. Preferably, 0.2% or more of C is included. On the other hand, when the amount of C exceeds 0.36%, weldability and toughness cannot be secured. Therefore, the upper limit of the amount of C is set to 0.36%. Preferably, the upper limit of the amount of C is set to 0.32%.

<Si: 0.02% to 0.5%>

Si forms an oxide film on the surface of the steel sheet at the time of annealing the steel sheet after cold rolling, and adversely affects Al plating properties. However, when its content is 0.5% or less, its effect is accepted. The amount of Si is preferably 0.3% or less. On the other hand, reducing the amount of Si to less than 0.02% causes an excessive load on a steelmaking process, so that the amount of Si is limited to 0.02% or more. The amount of Si is preferably 0.05% or more.

<Mn: 1.2% to 2.2%>

Mn is an extremely important element for securing the hardenability of a hot stamping material during hot stamping, and 1.2% or more of Mn needs to be added in order to obtain the effect. The amount of Mn is preferably 1.4% or more. On the other hand, when Mn is included in an amount exceeding 2.2%, there is concern that mechanical properties may be deteriorated due to solidifying segregation, so that the upper limit thereof is set to 2.2%. The amount of Mn is preferably 2.0% or less.

<P: 0.001 % to 0.03%>

P is an impurity and adversely affects the hot workability, so that the amount of P has to be limited to 0.03% or less. The amount of P is preferably limited to 0.02% or less. On the other hand, reducing the amount of P more than necessary causes a great burden on the steelmaking process, so that the lower limit thereof may be set to 0.001%.

<S: 0.0001% to 0.02%>

S is an impurity and adversely effects hot workability and mechanical properties such as ductility and toughness, so that the amount of S has to be limited to 0.02% or less. The amount of S is preferably limited to 0.01% or less. On the other hand, reducing the amount of S more than necessary causes a great burden on the steelmaking process, so that the lower limit thereof may be set to 0.0001%.

<Cr: 1.1% to 2.1%>

Cr has an effect of suppressing a nitriding reaction of Al (formation of AlN) which is a competitive reaction occurring when an Al plating layer is subjected to Al-Fe alloying. The effect is particularly clarified by addition of 1.1% or more of Cr, and the adhesion between the base metal and the coated layer is enhanced. Therefore, the amount of Cr is set to 1.1% or more. The amount of Cr is preferably 1.2% or more. On the other hand, even if Cr is added in an amount exceeding 2.1%, the effect is saturated and the manufacturing cost increased, so that the upper limit thereof is set to 2.1%. The amount of Cr is preferably set to 2.0% or less. It was also found that Cr affects the diffusion behavior of Fe and also affects the phase configuration and morphology of the alloyed layer.

<N: 0.001% to 0.01%>

N is bonded to B and has an action of reducing the contribution of B to hardenability, so that it is desirable to reduce the amount of N as much as possible. However, when addition of Ti, which will be described later, is performed and the amount of N is 0.01% or less, the action of reducing the contribution to hardenability is suppressed, so that the inclusion of N is accepted. A more preferable amount of N is 0.005% or less. On the other hand, reducing the amount of N more than necessary causes a great burden on the steelmaking process, so that the lower limit thereof is set to 0.0010%.

<Ti: 0.01% to 0.5%>

Ti is bonded to N and has an effect of suppressing the action of reducing the contribution of B to hardening due to the binding of N and B. In order to obtain the effect stably, it is necessary to add 0.01% or more of Ti. It is preferable to add 0.02% or more of Ti. On the other hand, there is concern that excessive addition of Ti may inhibit recrystallization of the steel sheet after cold rolling and may impair productivity, and there is concern that Ti may be bonded to C and reduce hardenability, so that the upper limit thereof is set to 0.5%. The amount of Ti is preferably 0.3% or less.

<Al: 0.01 to 0.1%>

Al is used as a deoxidizing element, but adversely affects plating properties because Al forms an oxide film. However, when the amount of Al is 0.1% or less, the adverse effect is accepted. The amount of Al is preferably 0.07% or less. On the other hand, making the amount of Al less than 0.01% causes a great burden on the steelmaking process, so that the lower limit thereof is set to 0.01%.

<B: 0.0001% to 0.01%>

Addition of 0.0001% or more of B exhibits an effect of enhancing hardening. Therefore, in the present invention, the amount of B is set to 0.0001% or more, and preferably to 0.0005% or more. On the other hand, excessive addition of B leads to deterioration of hot workability and decrease in ductility, so that the upper limit thereof is set to 0.01%.

To the chemical composition used for the steel sheet for hot stamping of the present invention, 0.01% to 1.0% of Nb may be further added.

<Nb: 0.01% to 1.0%>

In the present invention, inclusion of Nb is optional. Nb is bonded to B like Ti and has an effect of suppressing the reduction in the contribution of B to the hardenability due to the binding of N and B. The effect is clarified by addition of 0.01% or more of Nb, so that the amount of Nb is preferably set to 0.01% or more. The amount of Nb is more preferably 0.02% or more. On the other hand, even though Nb is added in an amount exceeding 1.0%, this effect is saturated. In addition, when Nb is added in an amount exceeding 1.0%, there is concern that recrystallization after cold rolling may be suppressed and the productivity may be impaired, and furthermore, there is concern that Nb is bonded to C and causes a reduction in hardening. Therefore, the upper limit of the amount of Nb is preferably set to 1.0%. The amount of Nb is more preferably 0.5% or less.

In the steel sheet for hot stamping of the present invention, the other components (remainder) are Fe, but impurities incorporated in from dissolved raw materials such as scrap and refractories are accepted. In addition, other elements can be added in a trace amount within the range that does not impair the operational effects of the present invention.

Next, features of the Al-Fe alloyed layer on the surface of the steel sheet for hot stamping of the present invention will be described.

The steel sheet for hot stamping according to the present invention is the steel sheet having the Al-Fe alloyed layer (alloyed Al plated steel sheet) including the A phase (the Fe-Al-based alloy phase including 45% to 85% of Fe and 4% to 13% of Si) on the surface. First, the present inventors conducted investigations by comparing the alloyed layers of the alloyed Al plated steel sheet and the hot stamped steel member formed by performing hot stamping on the alloyed Al plated steel sheet.

As a result, it was found that in a case where heating of the steel sheet at the time of hot stamping is performed within a short period of time by adopting a rapid heating method executed at a temperature rising rate of 50 °C/s or more, such as an energizing method, there is substantially no difference between the alloyed layer of the alloyed Al plated steel sheet and the alloyed layer of the hot stamped steel member after hot stamping. That is, it was found that the configuration and properties of the alloyed layer of the steel sheet before hot stamping are inherited by the hot stamped steel member after hot stamping. It is presumed that this is because in the hot stamping method, the time during which the Al-Fe alloyed layer is at a high temperature is short, and even if a solid phase diffusion of elements occurs, a compositional change or the resulting phase configuration of the Al-Fe alloy are rarely changed. Therefore, examinations were conducted to cause the alloyed layer of the alloyed Al plated steel sheet before hot stamping to be excellent in fatigue properties and corrosion resistance.

First, regarding the examinations, first, an alloying process of an Al plating layer was examined in detail.

The alloying of the Al plating layer is a process of diffusing Fe from the steel sheet side into the Al plating layer. Therefore, at the initial state of the alloying, an alloy phase having a high Al concentration, such as $FeAl_3$ and $Fe_2Al_5$ are formed on the outermost surface of the Al plating layer. In addition, it was found that the roughness of the surface of the Al plating layer increases with the formation of the alloy phase having a high Al concentration. It is considered that the change in roughness is a result that reflects crystal growth and crystal morphology of $Fe_2Al_5$ and the like. It was also found that the surface roughness turns to decrease as the diffusion of Fe further progresses due to the progress of the alloying. It is presumed that this is because a phase (A phase (the Fe-Al-based alloy phase including 45% to 85% of Fe and 4% to 13% of Si)) having a higher Fe concentration than that of the alloy phase having a high Al concentration is formed even on the outermost surface of the Al plating layer and the crystal morphology thereof is reflected, resulting in a reduction in the roughness as a whole. It is presumed that the A phase is the Fe-Al-based alloy phase including 45% to 85% of Fe and 4% to 13% of Si and an alloy phase primarily including at least one of $FeAl_2$, $Fe_2Al_5$, and a FeAlSi compound.

It was found that in order to improve fatigue properties from the change in surface roughness, it is necessary to cause the diffusion of Fe to progress and increase the proportion of the phase (the A phase (the Fe-Al-based alloy phase including 45% to 85% of Fe and 4% to 13% of Si)) having a high Fe concentration in the outermost surface of the alloyed layer. On the other hand, it was also found that since it is known that a phase having a high Fe concentration is inferior in corrosion resistance, it is necessary to cause a phase having a high Al concentration (B phase) to remain so as not to impair corrosion resistance, which is the original purpose of using an Al plated steel sheet.

Therefore, the phase configuration of an alloyed layer which can achieve both excellent fatigue properties and excellent corrosion resistance was examined, and it became clear that the phase configuration refers to a case where the sum of the lengths occupied by the A phase in the uppermost surface of a cross section of the Al-Fe alloyed layer perpendicular to the surface of the steel sheet is 10% or more and less than 50% of a measurement length.

When the proportion (A phase proportion) of the sum of the lengths occupied by the A phase in the entire uppermost surface of the Al-Fe alloyed layer is less than 10%, excellent fatigue properties are not obtained. In order to further enhance the fatigue properties, it is preferable to set the A phase proportion to 25% or more. On the other hand, when the A phase proportion exceeds 50%, excellent corrosion resistance cannot be obtained. In order to further improve corrosion resistance, it is preferable to set the A phase proportion to 35% or less.

In addition, the Al-Fe alloyed layer includes the B phase as a phase other than the A phase (the Fe-Al-based alloy phase including 45% to 85% of Fe and 4% to 13% of Si). The B phase has $Fe_2Al_5$ and $FeAl_2$ phases as primary phases and further has a chemical composition close to any of the three phases mentioned on the left (alloy phases primarily including $FeAl_2$, $Fe_2Al_5$, and a FeAlSi compound). The chemical composition close to any of the three phases mentioned on the left deviates from the stoichiometric ratio and is considered as a substance that cannot be identified.

Since the Al-Fe alloyed layer according to the present invention is formed by diffusion of Fe in the steel sheet of the base metal into the Al plating layer, the Al-Fe alloyed layer has an Fe concentration distribution in which the Fe concentration is high on the steel sheet side of the Al-Fe alloyed layer and the Fe concentration decreases toward the surface side of the Al-Fe alloyed layer. The Fe content in the Al-Fe alloyed layer is preferably 40 to 80 mass% as a whole. When the average value of the Fe content in the Al-Fe alloyed layer is less than 40%, the melting point thereof is low, and there is concern that partial melting down or the like occurs during heating in hot stamping, which is not preferable. On the other hand, when the average value of the Fe content exceeds 80%, the corrosion resistance deteriorates, which is not preferable.

In addition, the Al-Fe alloyed layer includes Si. Si is added to a molten Al plating bath and included in the Al-Fe alloyed layer in order to suppress excessive alloying of Al and Fe during hot dip aluminum plating. The average Si content in the Al-Fe alloyed layer is in a range of 3 to 15 mass% with respect to the total amount of Al and Si. The A phase, which is a feature of the present invention, includes 4% to 13% of Si.

The A phase includes 4% to 13% of Si. In a case where the Si content in the A phase is less than 4%, the alloying of the Fe-Al alloy phase has not progressed sufficiently, so that a target proportion of the A phase distributed on the surface in the present invention cannot be obtained. The same is applied to a case where the proportion of the B phase is high. When the Si content in the A phase exceeds 13%, the corrosion resistance decreases, which is not preferable.

The remainder of the Al-Fe alloyed layer excluding Fe and Si consists of Al and impurities, but Mg, Zn, and the like may be appropriately added from the viewpoint of corrosion resistance and fatigue properties.

The thickness of the Al-Fe alloyed layer shall be 15 $\mu$m or more. This is because, when the thickness of the Al-Fe alloyed layer is less than 15 $\mu$m, excellent corrosion resistance cannot be obtained even if the sum of lengths occupied by the A phase (A phase proportion) to the outermost surface of the alloyed layer is 50% or less of the entire uppermost surface of the alloyed layer.

On the other hand, the upper limit of the thickness of the Al-Fe alloyed layer is not particularly provided from the viewpoint of corrosion resistance. However, when the Al-Fe alloyed layer is too thick, there is concern of cracking in the alloyed layer during hot stamping. Therefore, the thickness thereof is preferably 100 $\mu$m or less, and more preferably 70 $\mu$m or less.

The thickness of the Al-Fe alloyed layer is measured as follows. That is, by performing elemental analysis while observing a cross section of the Al-Fe alloyed layer perpendicular to the surface of the steel sheet using a scanning electron microscope (SEM) equipped with an energy dispersive X-ray element analyzer (EDS), a region where Al is present in the cross section is identified, the region where Al is present is recognized as the Al-Fe alloyed layer, and the thickness of the Al-Fe alloyed layer is measured, whereby the thickness of the Al-Fe alloyed layer is measured.

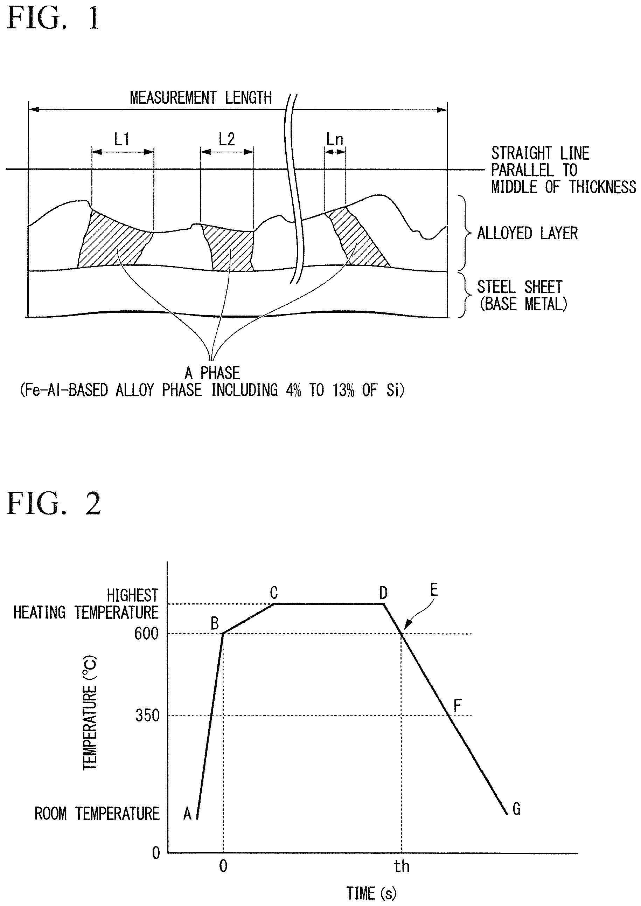

The lengths of the A phase in the outermost surface of the Al-Fe alloyed layer, the sum thereof, and the A phase proportion can be determined by a method schematically illustrated in FIG. 1.

That is, the cross section of the Al-Fe alloyed layer perpendicular to the surface of the steel sheet is observed with an optical microscope (OM), both ends of the A phase exposed to the uppermost surface of the Al-Fe alloyed layer are projected on a straight line parallel to a thickness middle line, and the distance between the intersections is taken as the length (L) of the A phase. As illustrated in FIG. 1, the sum (total L) of the lengths of the A phase is obtained by measuring the lengths (L1, L2, ..., Ln) of the A phase and summing up the lengths as in Equation (2). In addition, the A phase proportion is obtained by Equation (3). The "measurement length" in Equation (3) means, as illustrated in FIG. 1, when both ends of the outermost surface in the cross section of the Al-Fe alloyed layer are projected on the straight line parallel to the thickness middle line of the steel sheet, the distance between the intersections.

$$\text{Total } L = L1 + L2 + \ldots + Ln \qquad \ldots(2)$$

$$\text{A phase proportion (\%)} = (\text{total } L / \text{measurement length}) \times 100 \qquad \ldots(3)$$

Identification of the A phase is performed by comparing energy dispersive spectroscopy (EDS) analysis results of the scanning electron microscope (SEM). The "measurement length" is examined in a plurality of visual fields so that the sum thereof is 500 $\mu$m or more. The distinction between the A phase and the B phase is made by comparing the elements of the two obtained by the SEM-EDS analysis. The A phase includes 45% to 85% of Fe, 4% to 13% of Si, and the remainder consisting of Al and impurities and is a phase having a high Fe concentration, whereas the B phase is an Fe-Al alloy phase having a higher Al concentration than that of the A phase and including Si in an amount of less than 4%.

In the present invention, "excellent fatigue properties" indicate a case where the fatigue limit ratio ($\sigma_W/\sigma_B$, $\sigma_W$ is the fatigue limit, and $\sigma_B$ is the tensile strength) obtained by repeating a plane bending fatigue test $1 \times 10^7$ times is 0.4 or more.

In addition, in the present invention, "excellent corrosion resistance" indicates that the number of cycles until rusting in a corrosion test is equal to or more than that of a hot-dip Zn-coated steel sheet having the same plating thickness. The corrosion test method will be described in detail in examples described later.

Next, a method of manufacturing a steel sheet for hot stamping according to the present invention will be described.

First, a steel having a predetermined chemical composition described above is cast. Continuous casting is desirable from the viewpoint of productivity. The slab thus obtained is hot rolled and then pickled. In a case of further forming a cold rolled steel sheet, cold rolling and annealing are performed. Those, that is, the hot rolled steel sheet which is pickled or the cold rolled steel sheet which is annealed are subjected to Al plating and a heat treatment (alloying heat treatment) for Al-Fe alloying of an Al plating layer.

Hot rolling, pickling, cold rolling, annealing, and Al plating may be performed appropriately according to the facilities owned by the manufacturer, and the conditions are not particularly limited. As an example of the hot rolling, a steel piece is reheated to 1100°C to 1300°C and is hot rolled at a rolling reduction of 80% or more with a finishing temperature of 850°C to 950°C. The winding temperature can be exemplified by 600°C to 750°C. For the pickling, the kind, concentration, and temperature of an acid can be selected to efficiently remove generated scale. Regarding the cold rolling ratio, a rolling reduction of 40% or more is preferable in order to secure flatness. The annealing temperature can be exemplified by 700°C to 780°C.

The Al plating method is not particularly limited, and in addition to a hot dip plating method, an electro plating method, a vacuum deposition method, a cladding method, and the like are possible. However, hot dip plating is preferable. As an Al bath for the Al plating, an Al bath which has a bath temperature of 670°C and includes 3 mass% to 15 mass% of Si as an auxiliary element is used, but the Al bath preferably includes Si in an amount of about 10%. Fe and the like eluted from the steel sheet as impurities are incorporated into the Al plating bath. As other additive elements, a small amount of elements (for example, Mg, Zn, and the like) which are particularly effective for improving corrosion resistance and fatigue properties can be added.

The Al plating thickness is adjusted to be 15 $\mu$m or more.

(Alloying Heat Treatment)

The Al plated steel sheet subjected to the Al plating is increased in temperature to a predetermined temperature and is subjected to a heat treatment for Al-Fe alloying of the Al plating layer. At this time, the Al-Fe alloyed layer is controlled so that the proportion of lengths occupied by the A phase in the uppermost surface of a cross section perpendicular to the surface of the steel sheet is 10% or more and 50% or less.

Specifically, heating is performed so that Formula (1) is satisfied under the heat treatment conditions in which the average heating speed between room temperature and 600°C is set to 51 °C/s or more and the highest heating temperature is set to be 600°C or more and 700°C or less, assuming that the time at which the steel sheet reaches 600°C is 0 (s), the temperature of the steel sheet after t (s) from the time at which the steel sheet reaches 600°C is T (°C), and the time during which the steel sheet is present at 600°C or more is th (s). Cooling is performed at a cooling rate of 10 °C/s or more from the highest heating temperature to 350°C. Through these heat treatments, the Al-Fe alloyed layer according to the embodiment can be realized.

[Formula 1]

$$3.90 \times 10^4 \leqq \int_0^{th} T dt \ (°C \cdot s) \leqq 2.00 \times 10^6 - 3.90 \times 10^5 \times [Cr] \qquad \cdots (1)$$

Here, [Cr] in Formula (1) is the concentration of Cr of the steel sheet expressed in mass%.

When the average heating speed between room temperature and 600°C is less than 51 °C/s, a morphology in which phases constituting the alloyed layer are laminated parallel to the surface of the steel sheet is formed, and a morphology in which the A phase is partially exposed to the other phases in the outermost layer of the alloy phase is not formed. It is speculated that this is because when the average heating speed between room temperature and 600°C is less than 51 °C/s, the diffusion behavior of Fe becomes uniform in a sheet plane viewed from the surface. The upper limit of the average heating speed between room temperature and 600°C is not particularly limited, and may be appropriately determined from the balance between facilities, and set to, for example, 100 °C/s or less.

The highest heating temperature is set to 600°C or more and 700°C or less. This is because when the highest heating temperature is less than 600°C, alloying requires a long period of time, and the productivity is impaired. On the other hand, when the highest heating temperature is more than 700°C, there is concern that melting of Al may occur prior to alloying and Al may be adhered to the heat treatment facilities. When the highest heating temperature is more than 700°C, there are cases where the steel sheet is hardened by subsequent cooling, the hardness of the alloyed Al plated steel sheet for hot stamping significantly increases, and hot stamping is hindered. Therefore, the highest heating temperature is set to 600°C or more and 700°C or less.

In a process where the steel sheet reaches 600°C and is cooled from the highest heating temperature, the integral value (the middle side in Formula (1)) of the time during which the steel sheet is present at 600°C or more and the temperature determines the proportion of the A phase exposed to the uppermost surface. When the value of the middle side in Formula (1) is less than $3.90 \times 10^4$, the proportion of the A phase does not become 10% or more. On the other hand, when the value of the middle side in Formula (1) exceeds $2.00 \times 10^6 - 3.90 \times 10^5 \times [Cr]$, the proportion of the A phase exceeds 50%. Therefore, in order to achieve both corrosion resistance and fatigue properties by setting the proportion of the A phase to be 10% or more and less than 50%, it is important to satisfy Formula (1).

It is preferable that the time th during which the steel sheet is present at 600°C or more is set to be less than 3600 seconds. When the time during which the steel sheet is present at 600°C or more is too long, the average Fe concentration in the Al-Fe alloyed layer increases and there is concern that the corrosion resistance may be deteriorated. The time th during which the steel sheet is present at 600°C or more is preferably set to be less than 2600 seconds.

The mechanism in which the Cr concentration of the steel sheet is associated with the configuration of the A phase is not necessarily clear. However, it is presumed that Cr tends to be concentrated on the surface layer or in the vicinity of the surface layer of the steel sheet and has an influence on the diffusion of Fe into the plating layer in some form.

In the method of manufacturing the alloyed Al plated steel sheet for hot stamping according to this embodiment, cooling after heating is important from the viewpoint of achieving both fatigue properties and corrosion resistance by controlling the morphology of the Al-Fe alloyed layer. The alloying heat treatment of the Al plating layer is a process of diffusing Fe from the steel sheet side into the Al plating layer, and at the initial state of the alloying, an alloy phase having a high Al concentration (for example, $FeAl_3$ and $Fe_2Al_5$) are formed on the outermost surface of the Al plating layer, and the surface roughness of the Al plating layer increases. It is speculated that the change in roughness is a result that reflects crystal growth and crystal morphology of $FeAl_3$, $Fe_2Al_5$, and the like. In addition, as the diffusion of Fe further progresses due to the progress of the alloying and the A phase is formed, the surface roughness mentioned above turns to decrease. As cooling is performed at a cooling rate of 10 °C/s or more on the basis of the formation of the A phase, the metallographic structure of the Fe-Al alloyed layer can be fixed in a state where the surface roughness of the Fe-Al alloyed layer decreases, and accordingly, both fatigue properties and corrosion resistance can be achieved. If the alloyed Al plated steel sheet in a state where the Al plating layer is alloyed by the heat treatment is subjected to a hot stamping process as it is without being subjected to a cooling process, the alloyed Al plated steel sheet is hot stamped with the metallographic structure of the Fe-Al alloyed layer being not fixed, and there is concern that the fatigue strength and corrosion resistance may decrease, which is not preferable.

In order to obtain the effect of cooling after the heat treatment, cooling from the highest heating temperature to 350°C is performed at an average rate of 10 °C/s or more. This is because when the average cooling rate is less than 10 °C/s, the proportion of the A phase exceeds 50%. In addition, in controlling the compositional morphology of the Al-Fe alloyed layer, the cooling rate may be high. However, when the cooling rate is too high, cooling situations may vary, and there is concern that the flatness of the steel sheet may be damaged. Therefore, it is desirable that the average cooling rate from the highest heating temperature to 350°C is set to 30 °C/s or less.

As cooling at a temperature less than 350°C, preferable conditions for facility specifications may be selected, and any of slow cooling and rapid cooling may be used. The cooling finishing temperature is preferably 50°C or less, and more preferably room temperature.

In the present invention, the atmosphere of the alloying heat treatment is not particularly limited, and the air, a hydrogen gas atmosphere, and the like can be applied, but the air is preferable. In addition, in the alloying heat treatment, the heat treatment may be performed in a coil form using a box annealing furnace, or a continuous annealing furnace may be used.

The alloyed Al plated steel sheet (steel strip) manufactured through the above processes may be appropriately subjected to skin pass rolling or leveling. In that case, it is preferable to set the applied strain to 5% or less.

The steel sheet for hot stamping (alloyed Al plated steel sheet) of the present invention manufactured in this manner is subjected to forming and hardening in the same process by a hot stamping method and is formed into a high strength member. Specifically, if necessary, the steel sheet (blank) cut into predetermined dimensions is heated and stamped with dies. As a method of heating the blank, an energization heating method is preferable in order to obtain high productivity. The heating temperature is generally set to a temperature at which the entire blank has an austenite phase, but in order to impart features to a member, a method of heating only a portion of the blank to the austenite phase can also be selected.

Cooling by the dies is generally performed at a cooling rate at which the part heated to the austenite phase transforms into a martensite phase. However, for the purpose of imparting features to a member, a method of setting the cooling rate of a portion of the part heated to the austenite phase to a gentle cooling rate at which martensitic transformation does not occur may also be selected.

As more specific hot stamping condition, for example, hot stamping is performed after a retention time of 1 second to 120 seconds after heating to 700°C to 1000°C at a temperature rising rate of 5 °C/sec to 500 °C/sec. Subsequently, for example, a condition of performing cooling between room temperature to 300°C at a cooling rate of 1 °C/sec to 1000 °C/sec can be exemplified.

The hot stamping material manufactured by the hot stamping method in combination with the energization heating method using the steel sheet for hot stamping of this embodiment as the blank includes the Al-Fe alloyed layer on the surface of the steel. The Al-Fe alloyed layer of the hot stamping material has the same composition and the same metallographic structure as those of the Al-Fe alloyed layer of the steel sheet for hot stamping, and furthermore, the proportion of lengths occupied by the A phase is 10% or more and 50% or less. This is because, as described above, since the blank is rapidly heated by the energization heating method, the hot pressing is finished before the composition or the like of the Al-Fe alloyed layer changes. Therefore, the manufactured hot stamping material is excellent in fatigue properties and corrosion resistance similarly to the steel sheet for hot stamping. The chemical composition of the steel of the hot stamping material is the same composition as the chemical composition in the steel sheet of the steel sheet for hot stamping. However, the metallographic structure of the steel becomes a hardened structure unlike the steel sheet of the steel sheet for hot stamping.

[Examples]

Hereinafter, the present invention will be described with reference to examples. The conditions in the following examples are condition examples adopted for confirming the feasibility and effects of the present invention, and the present invention is not limited to the condition examples. Furthermore, the present invention can adopt various conditions without departing from the gist of the present invention as long as the object of the present invention is achieved.

<Example 1>

Slabs having the chemical compositions shown in Table 1 were heated to 1200°C, hot rolled at a finishing temperature of 880°C to 900°C, and wound at a winding temperature of 630°C to 700°C, whereby a plurality of hot rolled steel sheets having a thickness of 2.4 mm or 2.8 mm were produced. The steel sheets were pickled, and those having a thickness of 2.4 mm were left as they are, whereas those having a thickness of 2.8 mm were formed into cold rolled steel sheets having a thickness of 1.4 mm.

Thereafter, annealing and Al plating were continuously performed using an experimental hot dip plating apparatus. The annealing conditions were retention at 740°C for 1.5 minutes, and the plating thickness was adjusted to be 10 to 70 μm per side. The plating bath condition was a bath temperature of 670°C, and the bath composition was set to Al-10%Si (including impurities).

Subsequently, the obtained hot rolled steel sheets and cold rolled steel sheets were subjected to a heat treatment for Al-Fe alloying of the Al plating layer.

As schematically shown in FIG. 2, three steps including temperature rising from room temperature (A→B→C), retention at the highest heating temperature (C→D), and cooling to room temperature (D→F→G) were performed. The horizontal axis of the graph shown in FIG. 2 represents the time (s) from the time at which the temperature of the steel sheet reaches 600°C as 0 (s).

Table 2 shows a list of heat treatment patterns (H01 to H14). Here, "time" of "C" and "D" in Table 2 respectively indicate "elapsed time from point B (0 s) to point C" and "elapsed time from point B (0 s) to point D" and, "th" of "E" indicates "elapsed time from point B (0 s) to point E".

A cross section perpendicular to the surface of the steel sheet was observed. The proportion (A phase proportion) of the lengths occupied by the A phase in the uppermost surface of the Al-Fe alloyed layer was obtained by using OM and EDS together (see FIG. 1). That is, identification of the A phase was performed by comparing energy dispersive spectroscopy (EDS) analysis results of the scanning electron microscope (SEM). The "measurement length" was examined in a plurality of visual fields so that the sum thereof was 500 $\mu$m or more. Identification of the A phase was performed by comparing the elements of both obtained by SEM-EDS analysis. A phase including 45% to 85% of Fe, 4% to 13% of Si, and the remainder consisting of Al and impurities was determined as the A phase.

Next, a hot stamping experiment was performed with an experimental press testing machine.

For the heating of the steel sheet, the steel sheet was heated to 910°C at a heating speed of 100 °C/s using the energization heating method, conveyed to a space between dies within 5 seconds, and pressed with a pair of upper and lower flat plates water-cooled, whereby a member (hereinafter, referred to as a hot stamping material) was obtained.

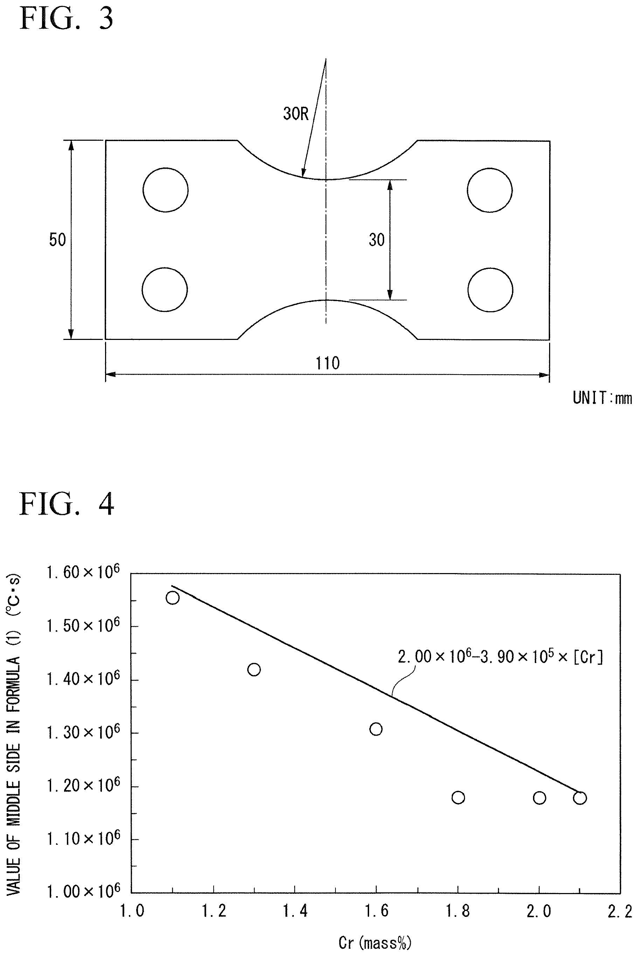

A JIS No. 5 tensile test piece, a fatigue test piece (illustrated in FIG. 3), and a corrosion resistance evaluation test piece were taken from the obtained hot stamping material. The tensile test piece and the fatigue test piece were taken so that the longitudinal directions thereof are orthogonal to the rolling direction. The corrosion resistance evaluation test piece was a 75 mm $\times$ 150 mm rectangle with four sides (cut faces) coated with a resin.

The tensile strength ($\sigma_B$) was examined using the J1S No. 5 test piece.

A plane bending fatigue test was conducted using the fatigue test piece, the fatigue limit ($\sigma_W$) for $10^7$ times was determined, and the fatigue limit ratio $\sigma_W/\sigma_B$ was obtained. The fatigue test was conducted with a stress ratio of -1 and a repetition rate of 5 Hz.

In the corrosion resistance evaluation test, the following three steps are repeated as one cycle.

Step 1: Salt spray (5% NaCl aqueous solution, 35°C, 4 hours)
Step 2: Drying (relative humidity 50%, 60°C, 2 hours)
Step 3: Retention in a humid environment (relative humidity 95%, 50°C, 2 hours)

As an evaluation method, five test pieces were placed in a test tank for each heat treatment pattern, and the number of cycles for the earliest rusting among the five test pieces was taken as the rusting cycle number of the heat treatment pattern.

In evaluating the corrosion resistance, a hot-dip Zn-coated steel sheet having the same plating thickness was used as a comparative example, and those that obtained a result equal to or more than the rusting cycle number (described in () in Table 3) of the hot-dip Zn-coated steel sheet were evaluated as being good.

The above evaluation test results are shown in Table 3.

It was found that in No. I and No. 2 using H01 and H02 as the heat treatment pattern, no A phase was recognized on the outermost surface of the Al-Fe alloyed layer, and the fatigue limit ratio $\sigma_W/\sigma_B$ was less than 0.40, which means inferior fatigue properties. It is presumed that in both No. 1 and No. 2, the average heating speed from room temperature to 600°C in the alloying heat treatment process was as low as 50 °C/s or less, and a morphology in which phases constituting the Al-Fe alloyed layer were laminated parallel to the surface of the steel sheet was formed.

In No. 4 using H03 as the heat treatment pattern, the value of the middle side in Formula (1) was less than $3.90 \times 10^4$, and the proportion of the A phase in the outermost surface of the Al-Fe alloyed layer was low, so that the fatigue properties were also interior.

In No. 8 in which the plating thickness was set to 10 $\mu$m, it was found that the number of rusting cycles was smaller than that of the hot-dip Zn-coated steel sheet (comparative material) and thus the corrosion resistance was poor.

In Nos. 3 and 4 in which the plating thickness was set to 15 $\mu$m, the number of rusting cycles exceeded that of the hot-dip Zn-coated steel sheet having the same thickness, so that the lower limit of the plating thickness was set to 15 $\mu$m in the present invention.

It was seen that in Nos. 5, 6, 7, 9, and 10, the plating thickness was 25 to 70 $\mu$m, the A phase proportion was 10% to 32%, and both excellent fatigue properties and excellent corrosion resistance were achieved after hot stamping.

Regarding steel A, in No. 11 alloyed with heat treatment pattern H10, the proportion of the A phase was 50% and both excellent fatigue properties and excellent corrosion resistance were achieved after hot stamping, whereas in No. 13 alloyed with heat treatment pattern H11, the value of the middle side in Formula (1) exceeded $2.00 \times 10^6$ - $3.90 \times 10^5 \times$ [Cr], the proportion of the FeAl phase became 52%, and the corrosion resistance after hot stamping became inferior.

Similarly, by comparing No. 12 and No. 14 to each other regarding steel B, comparing No. 15 and No. 16 to each other regarding steel C, comparing No. 17 and No. 18 to each other regarding steel D, and comparing No. 19 and No. 20 to each other regarding steel E, it became clear that when the proportion of the A phase is 50%, both excellent fatigue properties and excellent corrosion resistance can be achieved after hot stamping, whereas when the proportion of the A phase exceeds 50%, excellent corrosion resistance is not shown.

Regarding steel F having a Cr content of 2.1%, in both No. 21 alloyed with heat treatment pattern H04 and No. 22 alloyed with heat treatment pattern H10, it was seen that the A phase proportion was in a range of 10% to 50% and both excellent fatigue properties and excellent corrosion resistance were achieved after hot stamping.

From the results of Example 1 described above, the value of the middle side in Formula (1) in which the proportion of the A phase becomes 50% appeared to have some correlation with the concentration of Cr of steel and was plotted as a graph, whereby FIG. 4 was obtained. From FIG. 4, the value of the middle side in Formula (1) in which the proportion of the A phase becomes 50% for all of six Cr concentrations [Cr] (mass%) was derived as $2.00 \times 10^6 - 3.90 \times 10^5 \times$ [Cr].

Therefore, in the present invention, the upper limit of the value of the middle side in Formula (1) was limited to $2.00 \times 10^6 - 3.90 \times 10^5 \times$ [Cr].

In any of the examples, there was substantially no change (or no change was observed) in the proportion occupied by the A phase in the Al-Fe alloyed layer, and the thickness and elements of the Al-Fe alloyed layer before and after the hot stamping.

[Table 1]

| Steel symbol | C | Si | Mn | P | S | Cr | N | Ti | Al | B | Nb |
|---|---|---|---|---|---|---|---|---|---|---|---|
| A | 0.18 | 0.40 | 2.2 | 0.01 | 0.002 | 2.0 | 0.003 | 0.01 | 0.03 | 0.0025 | 0.1 |
| B | 0.22 | 0.20 | 2.0 | 0.01 | 0.002 | 1.8 | 0.003 | 0.03 | 0.03 | 0.0025 | 0.05 |
| C | 0.28 | 0.12 | 1.6 | 0.01 | 0.002 | 1.6 | 0.003 | 0.03 | 0.03 | 0.0020 | - |
| D | 0.30 | 0.10 | 1.3 | 0.01 | 0.003 | 1.3 | 0.003 | 0.03 | 0.03 | 0.0020 | - |
| E | 0.36 | 0.22 | 1.2 | 0.01 | 0.003 | 1.1 | 0.003 | 0.03 | 0.03 | 0.0025 | - |
| F | 0.19 | 0.30 | 2.1 | 0.01 | 0.003 | 2.1 | 0.003 | 0.02 | 0.03 | 0.0023 | 0.1 |
| Unit is mass%. "-" indicates no addition. Remainder consists of Fe and impurities. | | | | | | | | | | | |

[Table 2]

| Heat treatment pattern | A → B | C | | D | | E | D→F | $\int_0^{th} Tdt$ |
|---|---|---|---|---|---|---|---|---|
| | Heating speed between room temperature and 600°C (°C/s) | Time (s) | Temperature (°C) | Time (s) | Temperature (°C) | th (s) | Cooling rate (°C/s) | (°C·s) |
| H01 | 40 | 5 | 700 | 65 | 700 | 75 | 10 | $5.18 \times 10^4$ |
| H02 | 50 | 15 | 650 | 1815 | 650 | 1819 | 12.5 | $1.18 \times 10^6$ |
| H03 | 51 | 5 | 700 | 25 | 700 | 35 | 10 | $2.38 \times 10^4$ |
| H04 | 55 | 5 | 600 | 65 | 600 | 65 | 10 | $3.90 \times 10^4$ |
| H05 | 52.5 | 7 | 610 | 67 | 610 | 68 | 10 | $4.14 \times 10^4$ |
| H06 | 60 | 5 | 700 | 65 | 700 | 75 | 10 | $5.18 \times 10^4$ |
| H07 | 55 | 5 | 660 | 105 | 660 | 111 | 10 | $7.29 \times 10^4$ |
| H08 | 55 | 10 | 700 | 720 | 700 | 730 | 10 | $5.10 \times 10^5$ |
| H09 | 55 | 30 | 630 | 1065 | 630 | 1067 | 15 | $6.72 \times 10^5$ |
| H10 | 52.5 | 15 | 650 | 1815 | 650 | 1819 | 12.5 | $1.18 \times 10^6$ |
| H11 | 52.5 | 20 | 675 | 1935 | 675 | 1940 | 15 | $1.31 \times 10^6$ |
| H12 | 55 | 20 | 700 | 2020 | 700 | 2025 | 20 | $1.42 \times 10^6$ |
| H13 | 60 | 15 | 640 | 2415 | 640 | 2419 | 10 | $1.55 \times 10^6$ |
| H14 | 55 | 12 | 680 | 2512 | 680 | 2517 | 16 | $1.71 \times 10^6$ |
| The underlined are outside of the ranges of the present invention. | | | | | | | | |

[Table 3]

| No. | Steel symbol | Hot rolling and cold rolling | Plating thickness ($\mu$m) | Heat treatment pattern | Cr (mass%) | Right side of Formula (1)*2 | $\int_0^{th}\dot{T}dt$ (°C·s) | A phase proportion (%) | $\sigma_B$ (MPa) | $\sigma_W$ (MPa) | $\sigma_W/\sigma_B$ | Rusting cycle number*1 | Note |
|---|---|---|---|---|---|---|---|---|---|---|---|---|---|
| 1 | B | Cold rolling | 25 | H01 | 1.8 | $1.30 \times 10^6$ | $5.18 \times 10^4$ | 0 | 1508 | 513 | 0.34 | 29(26) | Comparative Example |
| 2 | C | Cold rolling | 40 | H02 | 1.6 | $1.38 \times 10^6$ | $1.18 \times 10^6$ | 0 | 1663 | 598 | 0.36 | 34(30) | Comparative Example |
| 3 | C | Cold rolling | 15 | H10 | 1.6 | $1.38 \times 10^6$ | $1.18 \times 10^6$ | 11 | 1659 | 673 | 0.41 | 22(18) | Present Invention |
| 4 | C | Hot rolling | 15 | H03 | 1.6 | $1.38 \times 10^6$ | $2.38 \times 10^4$ | 4 | 1634 | 611 | 0.37 | 21(18) | Comparative Example |
| 5 | A | Hot rolling | 25 | H04 | 2.0 | $1.22 \times 10^6$ | $3.90 \times 10^4$ | 10 | 1492 | 609 | 0.41 | 27(26) | Present Invention |
| 6 | B | Hot rolling | 40 | H05 | 1.8 | $1.30 \times 10^6$ | $414 \times 10^4$ | 16 | 1496 | 613 | 0.41 | 32(30) | Present Invention |
| 7 | C | Cold rolling | 25 | H06 | 1.6 | $1.38 \times 10^6$ | $5.18 \times 10^4$ | 14 | 1650 | 673 | 0.41 | 28(26) | Present Invention |
| 8 | B | Cold rolling | 10 | 1107 | 1.8 | $1.30 \times 10^6$ | $7.29 \times 10^4$ | 22 | 1504 | 612 | 0.41 | 10(12) | Comparative Example |
| 9 | B | Cold rolling | 40 | 1108 | 1.8 | $1.30 \times 10^6$ | $5.10 \times 10^5$ | 28 | 1507 | 628 | 0.42 | 31(30) | Present Invention |
| 10 | B | Cold rolling | 70 | H09 | 1.8 | $1.30 \times 10^6$ | $6.72 \times 10^5$ | 32 | 1512 | 634 | 0.42 | 33(32) | Present Invention |
| 11 | A | Cold rolling | 25 | H10 | 2.0 | $1.22 \times 10^6$ | $1.18 \times 10^6$ | 50 | 1518 | 667 | 0.44 | 26(26) | Present Invention |
| 12 | B | Cold rolling | 25 | H10 | 1.8 | $1.30 \times 10^6$ | $1.18 \times 10^6$ | 50 | 1506 | 660 | 0.44 | 27(26) | Present Invention |
| 13 | A | Cold rolling | 25 | H11 | 2.0 | $1.22 \times 10^6$ | $1.31 \times 10^6$ | 52 | 1504 | 666 | 0.44 | 24(26) | Comparative Example |

(continued)

| No. | Steel symbol | Hot rolling and cold rolling | Plating thickness (μm) | Heat treatment pattern | Cr (mass%) | Right side of Formula (1)*2 | $\int_0^{th} Tdt$ (°C·s) | A phase proportion (%) | $\sigma_B$ (MPa) | $\sigma_W$ (MPa) | $\sigma_W / \sigma_B$ | Rusting cycle number*1 | Note |
|---|---|---|---|---|---|---|---|---|---|---|---|---|---|
| 14 | B | Cold rolling | 25 | H11 | 1.8 | $1.30 \times 10^6$ | $\underline{1.31 \times 10^6}$ | $\underline{58}$ | 1511 | 663 | 0.44 | 20(26) | Comparative Example |
| 15 | C | Cold rolling | 25 | H11 | 1.6 | $1.38 \times 10^6$ | $1.31 \times 10^6$ | 50 | 1660 | 700 | 0.42 | 26(26) | Present Invention |
| 16 | C | Cold rolling | 25 | H12 | 1.6 | $1.38 \times 10^6$ | $\underline{1.42 \times 10^6}$ | $\underline{54}$ | 1668 | 701 | 0.42 | 21(26) | Comparative Example |
| 17 | D | Cold rolling | 25 | H12 | 13 | $1.49 \times 10^6$ | $1.42 \times 10^6$ | 50 | 1733 | 737 | 0.43 | 26(26) | Present Invention |
| 18 | D | Cold rolling | 25 | H13 | 1.3 | $1.49 \times 10^6$ | $\underline{1.55 \times 10^6}$ | $\underline{53}$ | 1741 | 734 | 0.42 | 23(26) | Comparative Example |
| 19 | E | Cold rolling | 25 | H13 | 1.1 | $1.57 \times 10^6$ | $1.55 \times 10^6$ | 50 | 1865 | 755 | 0.40 | 27(26) | Present Invention |
| 20 | E | Cold rolling | 25 | 1114 | 1.1 | $1.57 \times 10^6$ | $\underline{1.71 \times 10^6}$ | $\underline{55}$ | 1859 | 748 | 0.40 | 22(26) | Comparative Example |
| 21 | F | Hot rolling | 25 | H04 | 2.1 | $1.18 \times 10^6$ | $3.90 \times 10^4$ | 10 | 1500 | 610 | 0.41 | 27(26) | Present Invention |
| 22 | F | Cold rolling | 25 | H10 | 2.1 | $1.18 \times 10^6$ | $1.18 \times 10^6$ | 50 | 1520 | 668 | 0.44 | 26(26) | Present Invention |

*1 () is the rusting cycle number of the hot-dip Zn-coated steel sheet having the same plating thickness.
*2 The right side of Formula (1) is $2.00 \times 10^6 - 3.9 \times 10^5 \times [Cr]$
The underlined are outside of the ranges of the present invention.

<Example 2>

Slabs having the chemical compositions (steel symbols G and H) shown in Table 4 were heated to 1200°C, hot rolled at a finishing temperature of 880°C to 910°C, and wound at a winding temperature of 600°C to 640°C, whereby a plurality of hot rolled steel sheets having a thickness of 3.0 mm were produced. The steel sheets were pickled and formed into cold rolled steel sheets having a thickness of 1.5 mm.

Thereafter, annealing and Al plating were continuously performed using an experimental hot dip plating apparatus. The annealing conditions were retention at 740°C for 1 minute, and the plating thickness was adjusted to be 30 μm per side. The plating bath condition was a bath temperature of 670°C, and the bath composition was set to Al-10%Si (including impurities).

Next, some of the obtained cold rolled steel sheets were subjected to a heat treatment for Al-Fe alloying of the Al plating layer, whereby alloyed Al plated steel sheets were obtained. The alloying condition was heat treatment pattern H08 in Table 2 (Example 1).

The alloyed Al plated steel sheet and the Al plated steel sheet that was not alloyed were hot stamped.

For the heating of the steel sheets, the Al plated steel sheet that was not alloyed was heated by a furnace heating method, inserted into a furnace retained at 910°C, taken out 5 minutes after the temperature of the steel sheet reached 900°C, and immediately stamped.

On the other hand, both the furnace heating method and the energization heating method were used for the alloyed Al plated steel sheet, and during the energization heating, the alloyed Al plated steel sheet was heated to 910°C at a heating speed of 100 °C/s and conveyed and pressed between dies within 5 seconds.

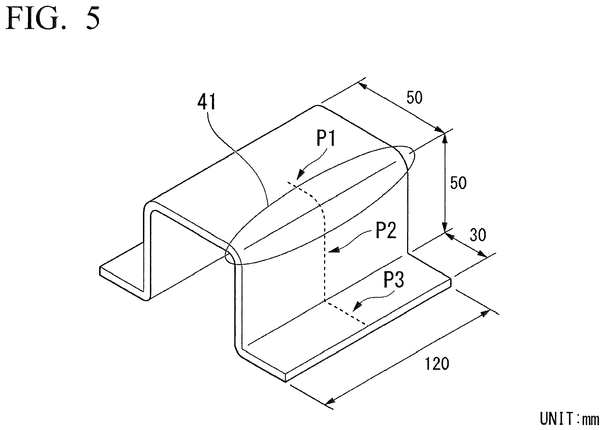

The formed shape was a hat shaped schematically illustrated in FIG. 5. The unit of the numerical value representing each dimension is mm.

A hot stamping material (referred to as HS member) formed into the hat shape was observed in detail.

As a result, in the HS member of steel sheet G, regarding any kind of steel sheet, extremely small peeling of plating in a shoulder portion 41 (only one side is illustrated) was recognized. It was presumed that the concentration of Cr of steel sheet G deviated from the range of the present invention and thus the adhesion to the base metal was weakened.

The dimensions after molding were exactly the same for any kind of steel sheet of any kind of steel.

Regarding the HS members (No. 1 to No. 3 in Table 5) of steel sheet H, the Vickers hardness of a cross section (center of sheet thickness) was measured along dotted line illustrated in FIG. 5. Measurement was performed on a center point P1 of a hat head side, points 10 mm and 20 mm away from P1 on the dotted line, a state end point P2 of the shoulder portion, points 10 mm, 20 mm, and 30 mm away from P2 on the dotted line, and a point 10 mm away from an end P3 of a bottom side on the dotted line.

The results are shown in Table 5.

The Vickers hardness of the cross section was 480 to 488 at the head side and the bottom side stamped at a fast cooling rate and was 459 to 468 at a standing wall portion at a slightly slower cooling rate than that of the former. It can be determined that these are the same regardless of the kind of steel sheet, heating method, and the like.

From these facts, it was seen that by performing hot stamping on the steel sheet of the present invention according to the energization heating method, a high strength member having both excellent fatigue properties and excellent corrosion resistance can be manufactured with high productivity. It was seen that there was no change from a case where the Al plated steel sheet was hot stamped in the furnace heating method.

[Table 4]

| Steel symbol | C | Si | Mn | P | S | Cr | N | Ti | Al | B |
|---|---|---|---|---|---|---|---|---|---|---|
| G | 0.26 | 0.20 | 1.4 | 0.01 | 0.002 | <u>1.0</u> | 0.003 | 0.01 | 0.03 | 0.0025 |
| H | 0.26 | 0.20 | 1.4 | 0.01 | 0.002 | 1.1 | 0.003 | 0.01 | 0.03 | 0.0025 |
| Unit is mass%. Remainder consists of Fe and impurities. The underlined are outside of the ranges of the present invention. | | | | | | | | | | |

[Table 5]

| No. | Kind of steel sheet | Heating method | Vickers hardness (HV) | | | | | | | |
|---|---|---|---|---|---|---|---|---|---|---|
| | | | Head side | | | Standing wall | | | | Bottom side |
| | | | P1 | 10 mm from P1 | 20 mm from P1 | P2 | 10 mm from P2 | 20 mm from P2 | 30 mm from P2 | 10 mm from P3 |
| 1 | Al plated steel sheet | Furnace heating | 482 | 487 | 486 | 468 | 462 | 461 | 468 | 481 |
| 2 | Alloyed Al plated steel sheet | Furnace heating | 480 | 483 | 484 | 465 | 461 | 459 | 468 | 483 |
| 3 | Alloyed Al plated steel sheet | Energization heating | 483 | 484 | 484 | 466 | 460 | 460 | 468 | 488 |

[Industrial Applicability]

According to the alloyed Al plated steel sheet for hot stamping of the present invention, even in a case where a rapid heating method such as energization heating is adopted for heating for hot stamping, a stamped article (hot stamped steel member) excellent in fatigue properties and corrosion resistance can be produced. In addition, since a component manufacturer (a person who performs hot stamping) can use rapid heating means such as energization heating instead of heating means using an annealing furnace in the related art, the productivity of the stamped article can be increased. Therefore, sufficient industrial applicability is provided.

[Brief Description of the Reference Symbols]

41: shoulder portion

**Claims**

1.   An alloyed Al plated steel sheet for hot stamping, comprising:

a steel sheet including, as a chemical composition, by mass%,

C: 0.18% to 0.36%,
Si: 0.02% to 0.5%,
Mn: 1.2% to 2.2%,
P: 0.001% to 0.03%,
S: 0.0001% to 0.02%,
Cr: 1.1% to 2.1%,
N: 0.001% to 0.01%,
Ti: 0.01% to 0.5%,
Al: 0.01% to 0.1%,
B: 0.0001% to 0.01%, and
a remainder including Fe and impurities; and

an Al-Fe alloyed layer which is formed on a surface of the steel sheet and has a thickness of 15 $\mu$m or more, wherein the Al-Fe alloyed layer includes an Fe-Al-based alloy phase including 45% to 85% of Fe and 4% to 13% of Si, and a proportion of a length occupied by the Fe-Al-based alloy phase in an uppermost surface of a cross section perpendicular to the surface of the steel sheet is 10% or more and 50% or less.

2.   The alloyed Al plated steel sheet for hot stamping according to claim 1 further comprising, as the chemical composition, by mass%:

Nb: 0.01% to 1.0%.

3. A hot stamped steel member obtained by performing forming and hardening in a same process through forming using dies after heating the alloyed Al plated steel sheet for hot stamping according to claim 1 or 2 to a temperature at which at least a portion of the alloyed Al plated steel sheet for hot stamping becomes an austenite phase.

4. A hot stamped steel member comprising:

a steel including, as a chemical composition, by mass%,

C: 0.18% to 0.36%,
Si: 0.02% to 0.5%,
Mn: 1.2% to 2.2%,
P: 0.001% to 0.03%,
S: 0.0001 % to 0.02%,
Cr: 1.1% to 2.1%,
N: 0.001% to 0.01%,
Ti: 0.01% to 0.5%,
Al: 0.01% to 0.1%,
B: 0.0001% to 0.01%, and
a remainder including Fe and impurities; and

an Al-Fe alloyed layer which is formed on a surface of the steel and has a thickness of 15 $\mu$m or more, wherein the Al-Fe alloyed layer includes an Fe-Al-based alloy phase including 45% to 85% of Fe and 4% to 13% of Si, and a proportion of a length occupied by the Fe-Al-based alloy phase in an uppermost surface of a cross section perpendicular to the surface of the steel sheet is 10% or more and 50% or less.

5. The hot stamped steel member according to claim 4 further comprising, as the chemical composition, by mass%: Nb: 0.01% to 1.0%.

# FIG. 1

MEASUREMENT LENGTH

L1　L2　Ln

STRAIGHT LINE PARALLEL TO MIDDLE OF THICKNESS

ALLOYED LAYER

STEEL SHEET (BASE METAL)

A PHASE
(Fe-Al-BASED ALLOY PHASE INCLUDING 4% TO 13% OF Si)

# FIG. 2

HIGHEST HEATING TEMPERATURE

600

350

TEMPERATURE (°C)

ROOM TEMPERATURE

0

B C D E F G A

0　th

TIME (s)

## FIG. 3

UNIT:mm

## FIG. 4

$2.00 \times 10^6 - 3.90 \times 10^5 \times [Cr]$

# FIG. 5

UNIT:mm

## INTERNATIONAL SEARCH REPORT

| International application No. |
|---|
| PCT/JP2017/003763 |

**A. CLASSIFICATION OF SUBJECT MATTER**

*C23C2/12*(2006.01)i, *B21D22/20*(2006.01)i, *C21D1/18*(2006.01)i, *C21D9/00* (2006.01)i, *C22C21/00*(2006.01)i, *C22C38/00*(2006.01)i, *C22C38/38*(2006.01)i, *C23C2/28*(2006.01)i, *C21D9/46*(2006.01)n

According to International Patent Classification (IPC) or to both national classification and IPC

**B. FIELDS SEARCHED**

Minimum documentation searched (classification system followed by classification symbols)
C23C2/12, B21D22/20, C21D1/18, C21D9/00, C22C21/00, C22C38/00, C22C38/38, C23C2/28, C21D9/46

Documentation searched other than minimum documentation to the extent that such documents are included in the fields searched
Jitsuyo Shinan Koho 1922-1996 Jitsuyo Shinan Toroku Koho 1996-2017
Kokai Jitsuyo Shinan Koho 1971-2017 Toroku Jitsuyo Shinan Koho 1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-118628 A (Nippon Steel & Sumitomo Metal Corp.), 30 June 2014 (30.06.2014), claims; paragraphs [0001] to [0008], [0017], [0027] to [0028], [0040] to [0050] (Family: none) | 1-5 |
| Y | JP 2015-131995 A (Nippon Steel & Sumitomo Metal Corp.), 23 July 2015 (23.07.2015), claims; paragraphs [0001] to [0014], [0024] to [0036], [0055] to [0077] (Family: none) | 1-5 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 April 2017 (05.04.17) | 18 April 2017 (18.04.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**EP 3 578 680 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002018531 A
- JP 2011137210 A